# EUROPÄISCHE PATENTSCHRIFT

(11) **EP 2 212 142 B1**
(45) Veröffentlichungstag und Bekanntmachung des Hinweises auf die Patenterteilung: **20.03.2013**
(21) Anmeldenummer: 08852876.5
(22) Anmeldetag: 20.11.2008
(51) Int. Cl.: B60J 7/22, B60J 7/14

(54) **ZWEISITZIGES KRAFTFAHRZEUG MIT EINEM VERSENKBAREN DACH UND EINEM WINDSCHOTT**
TWO-SEAT MOTOR VEHICLE HAVING A RETRACTABLE ROOF AND A WIND DEFLECTOR
VÉHICULE AUTOMOBILE À DEUX PLACES AVEC UN TOIT ESCAMOTABLE ET UN DÉFLECTEUR D'AIR

(30) Priorität: 20.11.2007 DE 102007055621
(43) Veröffentlichungstag der Anmeldung: 04.08.2010
(73) Patentinhaber: Magna Steyr Fahrzeugtechnik AG & Co. KG, 8041 Graz (AT)
(72) Erfinder: MAC FARLAND, David, 85716 Unterschleissheim (DE)
(74) Vertreter: Rausch, Gabriele
(86) Internationale Anmeldenummer: PCT/EP2008/065946
(87) Internationale Veröffentlichungsnummer: WO 2009/065911

(56) Entgegenhaltungen:
- EP-A- 1 197 369
- WO-A-2005/032871
- DE-C1- 4 332 938

## Beschreibung

Die vorliegende Erfindung betrifft ein zweisitziges Kraftfahrzeug mit einem versenkbaren Dach und einem Windschott, nach dem Oberbegriff des Anspruchs 1.

Bei Fahrzeugen mit versenkbaren Fahrzeugdächern wird aus Komfortgründen, insbesondere für höhere Geschwindigkeiten und oder kühlere Witterungen ein Windschott vorgesehen, das von einer Ruhestellung in eine Betriebsstellung bringbar ist. In der Betriebsstellung befindet es sich dann bis auf Kopfhöhe der Fahrzeuginsassen und erzielt den Effekt, dass Fahrtwind nicht in den Raum zwischen Frontscheibe und Windschott eindringen kann und damit ein als unangenehm empfundenen Luftstrom-Effekt vermieden wird. Bei geschlossenem Dach hat das Windschott keine Funktion und wird deshalb aus Platzgründen in eine Ruhestellung bzw. eine demontagestellung gebracht, beispielsweise im Kofferraum verstaut.

Bei schnellem bzw. bei kurzzeitigem Öffnen des Daches ist es für die Insassen jedoch äußerst umständlich das Windschott wieder zu installieren. Es muss angehalten werden und gegebenenfalls sogar ausgestiegen werden, um das Windschott zu installieren. Die Patentanmeldung EP1197369A2 zeigt ein Fahrzwuy nach dem Obergegriff des Anspruchs 1.

Der vorliegenden Erfindung liegt die Aufgabe zugrunde, ein zweisitziges Fahrzeug mit einem versenkbaren Dach und einem Windschott zu schaffen, das beim Öffnen des Daches einfach und ohne zusätzlichen Maßnahmen der Fahrzeuginsassen in Betriebsstellung überführt werden kann bzw. beim Schließen des Daches ebenso einfach wieder in seine Ruhestellung verbracht werden kann.

Diese Aufgabe wird durch die Merkmale des Patentanspruchs 1 gelöst.

Erfindungsgemäß ist das Windschott längsbeweglich angeordnet und ist von einer eingezogenen Ruhestellung in eine Betriebsstellung bewegbar ist, wobei das Windschott mittels wenigstens eines Verbindungslenkers mit dem Schwenkmechanismus des ersten Dachabschnitts verbunden und beim Öffnen des ersten Dachabschnitts von der Ruhestellung in die Betriebsstellung bewegbar ist.

Der Schwenkmechanismus des ersten Dachabschnitts weist je Fahrzeugseite einen Lenker auf, der in einem unteren Lagerpunkt gelagert ist, wobei der Lenker jenseits des Lagerpunkts einen Lenkerfortsatz aufweist, der mit dem zugeordneten Verbindungslenker des Windschotts gelenkig verbunden ist. Somit wird auf konstruktiv sehr einfache und damit kostengünstige Weise eine Zwangsführung von Windschott mit dem ersten Dachabschnitt erreicht und werden zusätzliche Handgriffe der Fahrzeuginsassen vermieden.

Weitere Einzelheiten, Merkmale und Vorteile der vorliegenden Erfindung ergeben sich aus der nachfolgenden Beschreibung unter Bezugnahme auf die Zeichnungen, in denen eine bevorzugte Ausführungsform der Erfindung dargestellt ist, auf die die Erfindung jedoch nicht beschränkt ist. In den Zeichnungen zeigen:
- Fig. 1: eine schematische Teil-Seitenansicht eines erfindungsgemäßen zweisitzigen Fahrzeugs mit einem versenkbaren Fahrzeugdach und Windschott in geschlossener Dachstellung;
- Fig. 2 bis 4: schematische Teil-Seitenansichten des Fahrzeugs von Fig. 1 zur Veranschaulichung des Öffnungsvorgangs des Fahrzeugdaches und der Bewegung des Windschotts, gemäß der vorliegenden Erfindung, vom Beginn des Öffnens gemäß Fig. 2 bis zum vollständigen Öffnen gemäß Fig. 4.

In den Zeichnungen sind gleiche Elemente mit den gleichen Bezugsziffern bezeichnet.

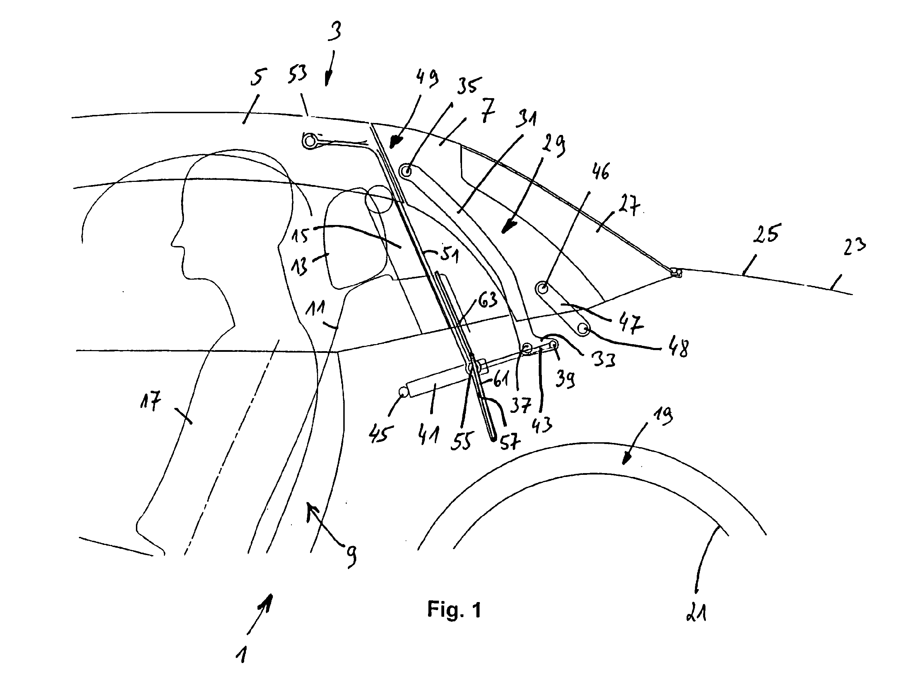

Es wird zunächst Bezug genommen auf Fig. 1, in der in Teil- Seitenansicht ein Fahrzeug 1 nur schematisch dargestellt ist. Das Fahrzeug 1 weist in üblicher Weise ein Chassis 2 und ein Fahrzeugdach 3 auf. Das Fahrzeugdach 3 weist einen ersten Dachabschnitt 5 auf, der sich von einer A-Säule (nicht dargestellt) zu einem zweiten Dachabschnitt 7 erstreckt. Der zweite Dachabschnitt 7 stellt gleichzeitig die C-Säule des Fahrzeugs 1 dar.

Das Fahrzeug 1 weist einen Fahrzeugsitz 9 auf, von dem schematisch die Rücken - oder Sitzlehne 11 und eine Kopfstütze 13 dargestellt sind. Hinter dem Fahrzeugsitz 9 befindet sich im Bereich des oberen Abschnitts der Sitzlehne 11 und der Kopfstütze 13 ein Überrollbügel 15, der in der Regel als gebogenes Rohr ausgebildet ist.

Auf dem Fahrzeugsitz 9 sitzend ist schematisch ein Fahrzeuginsasse 17 dargestellt.

Das Fahrzeug 1 weist in üblicher Weise einen hinteren Radkasten 19 auf, in dem ein Hinterrad 21 angeordnet ist. Weiterhin weist das Fahrzeug 1 in üblicher Weise einen Kofferraumdeckel 23 auf. Zwischen Kofferraumdeckel 23 und einer Heckscheibe 27 des zweiten Dachabschnitts 7 ist eine Heckabdeckung 25 vorgesehen, die schwenkbar angeordnet ist, um beim Verschwenken des Daches einen Schwenkraum zu öffnen.

Das Fahrzeugdach 3 weist einen Schwenkmechanismus 29 für den zweiten Dachabschnitt 7 und einen Schwenkmechanismus 49 für den ersten Dachabschnitt 5 auf. Der Schwenkmechanismus 29 für den zweiten Dachabschnitt 7 weist zwei erste seitliche Lenker 31 auf. Wie aus Fig. 1 ersichtlich, ist der erste Lenker 41 leicht gekrümmt und weist einen L-förmigen Fortsatz 33 auf. In einem oberen Gelenkpunkt 35 ist der erste Lenker 31 an dem zweiten Dachabschnitt 7 gelenkig angeordnet und weist weiterhin einen unteren Gelenkpunkt 37 auf, der an einem Lagerbock (nicht dargestellt) gelenkig angeordnet ist.

In einem hinteren Gelenkpunkt 39 des L-förmigen Fortsatzes 33 des ersten Lenkers 31 ist gelenkig eine Kolbenstange 43 eines Antriebskolbens 41 gelagert, der seinerseits in einem vorderen Lagerpunkt 45 an dem Fahrzeugchassis 2 gelenkig gelagert ist. Ein jeder seitlich angeordneter Antriebskolben 41 dient zum Antrieb der Schwenkbewegung des zweiten Dachabschnitts 7.

Zur einwandfreien Durchführung der Schwenkbewegung weist der Schwenkmechanismus 29 für den zweiten Dachabschnitt 7 weiterhin einen zweiten Lenker 47 auf, der hinter dem ersten Lenker 31 angeordnet ist. Der zweite Lenker 47 ist in einem oberen Gelenkpunkt 46 mit dem zweiten Dachabschnitt 7 verbunden und in einem unteren Gelenkpunkt 48 mit dem Lagerbock (nicht dargestellt) gelenkig verbunden. Die Schwenkbewegung des zweiten Dachabschnitts 7 wird weiter unten näher erläutert werden.

Der Schwenkmechanismus 49 für den ersten Dachabschnitt 5 weist zwei Säulen 51 auf, die einstückig ausgebildet sind. Jede Säule 51 ist in einem oberen Anlenkpunkt 53 mit dem ersten Dachabschnitt 5 gelenkig verbunden und in einem unteren Anlenkpunkt 55 gelagert. Wie aus Fig. 1 ersichtlich, sind die Säulen 51 L-förmig ausgebildet.

Jede Säule 51 des Schwenkmechanismus 49 für den ersten Dachabschnitt 5 weist jenseits ihres Lagerpunktes 55 einen Säulenfortsatz 57 auf, der an seinem Ende gelenkig mit einem Verbindungslenker 61 verbunden ist, der wiederum mit einem Windschott 63 gelenkig verbunden ist.

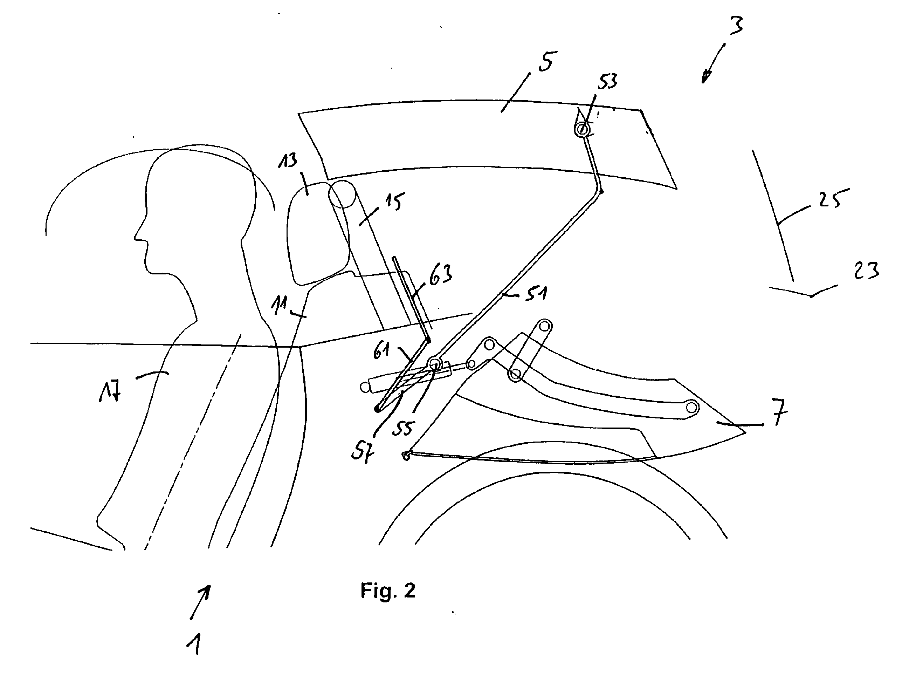

Es wird nunmehr Bezug genommen auf die Fig. 2 bis 4, in denen in aufeinander folgenden Schritten das Einziehen des Fahrzeugdaches 3 und die Bewegung des Windschotts 63 dargestellt sind.

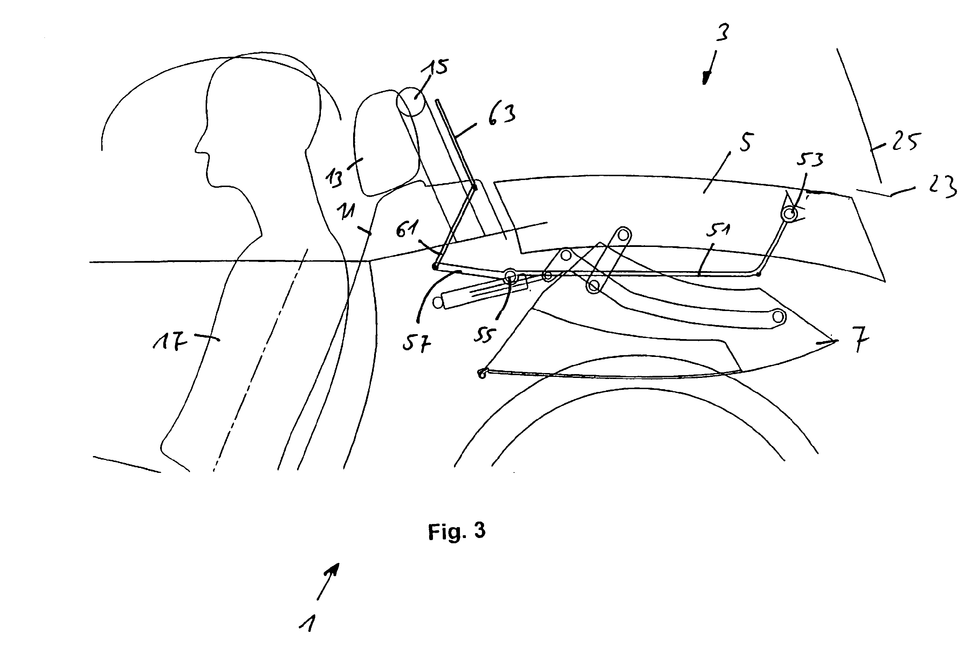

In Fig. 2 ist eine ähnliche Darstellung gezeigt wie in Fig. 1, wobei aus Gründen der Klarheit einige der Bezugszeichen von Fig. 1 nicht wiederholt werden. In der Darstellung von Fig. 2 ist der zweite Dachabschnitt 7 bereits in seinen eingezogenen oder versenkten Zustand verschwenkt worden. Durch Bewegen des ersten Dachabschnitts 5 von seiner geschlossenen Stellung in die eingezogene Stellung, bewegt der Säulenfortsatz 57 den Verbindungslenker 61 nach oben und dieser wiederum schiebt das Windschott 63 entlang dessen seitlichen Führungen (nicht dargestellt) nach oben bis zu einer Position in Fig. 3. Dort befindet sich der erste Dachabschnitt 5 in seiner eingezogenen bzw. versenkten Position.

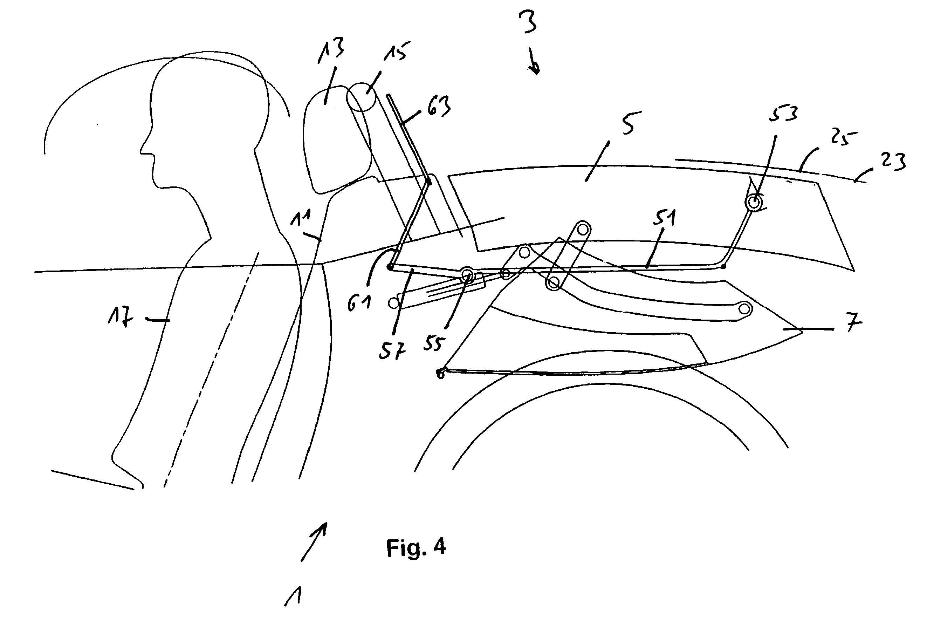

In Fig. 4 ist dann schließlich die Heckabdeckung 25 zurückgeklappt und das Fahrzeug 1 ist fahrbereit.

Bei umgekehrter Bewegung des ersten Dachabschnitts 5 wird das Windschott 63 wieder in seine Ruhestellung gemäß Fig. 1 zurückversetzt.

## Patentansprüche

1. Zweisitziges Kraftfahrzeug, insbesondere Cabriolet, mit
einem Chassis (2), zwei Fahrzeugsitzen (9), die eine Rückenlehne (11) und eine Kopfstütze (13) aufweisen,
einem versenkbaren Fahrzeugdach (3), das einen ersten (5) und einen zweiten (7), im Wesentlichen starren Dachabschnitt aufweist, wobei ein Schwenkmechanismus für den ersten Dachabschnitt (5) und ein Schwenkmechanismus für den zweiten Dachabschnitt (7) vorgesehen ist, wobei der erste Dachabschnitt (5) sich im Wesentlichen von der A-Säule zur C-Säule (7) des Kraftfahrzeugs (1) erstreckt und der zweite Dachabschnitt (7) im Wesentlichen die C-Säule bildet und den Fahrgastraum oberhalb des Fahrzeugchassis (2) umschließt, und
einem Windschott (63), das hinter den Fahrzeugsitzen (9) angeordnet ist, wobei
das Windschott (63) längsbeweglich angeordnet ist und von einer eingezogenen Ruhestellung in eine Betriebsstellung bewegbar ist,
wobei das Windschott (63) mittels wenigstens eines Verbindungslenkers (61) mit dem Schwenkmechanismus des ersten Dachabschnitts (5) verbunden und beim Öffnen des ersten Dachabschnitts (5) von der Ruhestellung in die Betriebsstellung bewegbar ist, **dadurch gekennzeichnet, dass**
der Schwenkmechanismus des ersten Dachabschnitts (5) je Fahrzeugseite eine Säule (51) aufweist, die in einem unteren Lagerpunkt (55) gelagert ist, wobei die Säule (51) jenseits des Lagerpunkts (55) einen Säulenfortsatz (57) aufweist, der mit dem zugeordneten Verbindungslenker (61) des Windschotts gelenkig verbunden ist.

## Claims

1. Two-seat motor vehicle, in particular cabriolet, having
a chassis (2), two vehicle seats (9), which have a back rest (11) and a head restraint (13),
a retractable vehicle roof (3) which has a first substantially rigid roof section (5) and a second substantially rigid roof section (7), 1 wherein a pivoting mechanism is provided for the first roof section (5) and a pivoting mechanism is provided for the second roof section (7), wherein the first roof section (5) substantially extends from the A pillar to the C pillar (7) of the motor vehicle (1), and the second roof section (7) substantially forms the C pillar and surrounds the passenger compartment above the vehicle chassis (2), and
a wind deflector (63) which is arranged behind the vehicle seats (9), wherein
the wind deflector (63) is arranged in a longitudinally movable manner and is movable from a retracted inoperative position into an operative position,
wherein the wind deflector (63) is connected to the pivoting mechanism of the first roof section (5) by means of at least one connecting link (61) and is movable from the inoperative position into the operative position during the opening of the first roof section (5), **characterized in that**
the pivoting mechanism of the first roof section (5) has, per vehicle side, a pillar (51) which is mounted in a lower bearing point (55), wherein, on the far side of the bearing point (55), the pillar (51) has a pillar extension (57) which is connected in an articulated manner to the associated connecting link (61) of the wind deflector.

## Revendications

1. Véhicule automobile à deux sièges, notamment cabriolet, avec :
un châssis (2), deux sièges de véhicule (9) comportant un dossier (11) et un appuie-tête (13) ;
un toit de véhicule (3) rabattable comportant une première (5) et une seconde (7) section de toit pour l'essentiel rigides, un mécanisme de basculement étant prévu pour la première section de toit (5) et un mécanisme de basculement étant prévu pour la seconde section de toit (7), la première section de toit (5) s'étendant pour l'essentiel du montant A au montant C (7) du véhicule automobile (1) et la seconde section de toit (7) formant pour l'essentiel le montant C et
entourant l'habitacle au-dessus du châssis de véhicule (2) ; et
un coupe-vent (63) disposé derrière les sièges de véhicule (9) ;
le coupe-vent (63) étant disposé de façon à pouvoir se déplacer dans le sens de la longueur et pouvant être déplacé d'une position de repos rentrée dans une position fonctionnelle ;
le coupe-vent (63) étant relié au mécanisme de basculement de la première section de toit (5) à l'aide d'au moins un bras oscillant de jonction (61) et
pouvant être déplacé de la position de repos dans la position mobile lors de l'ouverture de la première section de toit (5) ;
**caractérisé en ce que** :
le mécanisme de basculement de la première section de toit (5) comporte respectivement de chaque côté du véhicule un montant (51) disposé dans un point de palier (55) inférieur, le montant (51) comportant de chaque côté du point de palier (55) un prolongement de montant (57) relié de façon articulée au bras oscillant de jonction (61) associé du coupe-vent.
